(19) Europäisches Patentamt
European Patent Office
Office européen des brevets

(11) **EP 4 443 536 A1**

(12) **EUROPEAN PATENT APPLICATION**

(43) Date of publication:
**09.10.2024 Bulletin 2024/41**

(21) Application number: **23216815.3**

(22) Date of filing: **14.12.2023**

(51) International Patent Classification (IPC):
*H01M 4/13* (2010.01)   *H01M 4/36* (2006.01)
*H01M 4/38* (2006.01)   *H01M 4/587* (2010.01)
*H01M 4/62* (2006.01)   *H01M 10/052* (2010.01)
*H01M 4/133* (2010.01)   *H01M 4/134* (2010.01)
*H01M 4/1395* (2010.01)   *H01M 4/02* (2006.01)

(52) Cooperative Patent Classification (CPC):
**H01M 4/622; H01M 4/13; H01M 4/133;**
**H01M 4/134; H01M 4/1395; H01M 4/36;**
**H01M 4/364; H01M 4/366; H01M 4/38;**
**H01M 4/386; H01M 4/587; H01M 4/62;**
**H01M 4/625; H01M 10/052;** H01M 2004/021;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.12.2022 KR 20220175661**

(71) Applicant: **SK On Co., Ltd.**
**Seoul 03161 (KR)**

(72) Inventors:
• **CHUNG, Da Bin**
**34124 Daejeon (KR)**
• **KIM, Hyo Mi**
**34124 Daejeon (KR)**
• **JANG, Hwan Ho**
**34124 Daejeon (KR)**
• **KIM, Moon Sung**
**34124 Daejeon (KR)**
• **RYU, Sang Baek**
**34124 Daejeon (KR)**
• **PARK, Da Hye**
**34124 Daejeon (KR)**
• **BANG, Sang In**
**34124 Daejeon (KR)**
• **YOOK, Seung Hyun**
**34124 Daejeon (KR)**
• **HAN, Jun Hee**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE FOR LITHIUM SECONDARY BATTERY AND LITHIUM SECONDARY BATTERY INCLUDING THE SAME**

(57) An anode for a lithium secondary battery includes a material layer configured to serve as a current collector, a first anode mixture layer formed on at least one surface of the material layer, and a second anode mixture layer formed on the first anode mixture layer. The first anode mixture layer includes a first silicon-based active material, the second anode mixture layer includes a second silicon-based active material, and a particle volume fraction ratio ($R_{PV}$) for each layer according to Equation 1 expressed as $R_{PV} = V_{D1}/V_{D2}$ is greater than 1. In Equation 1, $V_{D1}$ is a volume fraction(%) of particles having a particle diameter of 2.5 $\mu$m or less in the first silicon-based active material, and $V_{D2}$ is a volume fraction(%) of particles having a particle diameter of 2.5 $\mu$m or less in the second silicon-based active material.

FIG. 1

EP 4 443 536 A1

(52) Cooperative Patent Classification (CPC): (Cont.)
H01M 2004/027; Y02E 60/10

**Description**

**BACKGROUND**

**1. FIELD**

The technology and implementations disclosed in this patent document generally relate to an anode for a lithium secondary battery and a lithium secondary battery including the same.

**2. DESCRIPTION OF THE RELATED ART**

Recently, a lot of research is being conducted on electric vehicles (EVs) that can replace vehicles that use fossil fuels, such as gasoline vehicles, diesel vehicles and others, which are the main causes of air pollution. Lithium secondary batteries with high discharge voltage and output stability are mainly used as a power source for such electric vehicles (EV). Accordingly, the need for lithium secondary batteries with high energy density is increasing, and research and development of high-capacity anodes for these batteries is also being actively conducted.

**SUMMARY**

The disclosed technology may be implemented in some embodiments to provide an anode for a lithium secondary battery that has excellent lifespan characteristics, rapid charging characteristics, resistance characteristics, and others, and to provide a lithium secondary battery including the anode.

In some embodiments of the disclosed technology, an anode for a lithium secondary battery includes a current collector; a first anode mixture layer formed on at least one surface of the current collector; and a second anode mixture layer formed on the first anode mixture layer. The first anode mixture layer includes a first silicon-based active material, the second anode mixture layer includes a second silicon-based active material, and a particle volume fraction ratio ($R_{PV}$) for each layer according to Equation 1 expressed as $R_{PV} = V_{D1}/V_{D2}$ is greater than 1.

In Equation 1 above, $V_{D1}$ is a first volume fraction value corresponding to a volume fraction(%) of particles having a particle diameter of 2.5 $\mu$m or less in the first silicon-based active material, and $V_{D2}$ is a second volume fraction value corresponding to a volume fraction(%) of particles having a particle diameter of 2.5 $\mu$m or less in the second silicon-based active material.

The first silicon-based active material may have the first volume fraction value ($V_{D1}$) of 1% to 15%.

The second silicon-based active material may have the second volume fraction value ($V_{D2}$) of 0.1% to 5%.

A specific surface area value of the first silicon-based active material may be equal to or greater than a specific surface area value of the second silicon-based active material. In some implementations, the term "specific surface area" may be used to indicate a physical property of solids that measures the total surface area per unit of mass.

The specific surface area of the first silicon-based active material may be from 3 $m^2$/g to 12 $m^2$/g.

The specific surface area of the second silicon-based active material may be from 1 $m^2$/g to 7 $m^2$/g.

A content of the first silicon-based active material in the first anode mixture layer may be less than or equal to a content of the second silicon-based active material in the second anode mixture layer.

The first anode mixture layer may include 2% to 7% by weight of the first silicon-based active material.

The second anode mixture layer may include 7% to 14% by weight of the second silicon-based active material.

A total content of the first silicon-based active material and the second silicon-based active material may be 2% to 20% by weight based on a total weight of the first anode mixture layer and the second anode mixture layer.

The first silicon-based active material may be a carbon-coated silicon-based active material.

The second silicon-based active material may be a silicon-based active material doped with a metal.

The metal may include magnesium (Mg).

Each of the first anode mixture layer and the second anode mixture layer may further include a rubber-based binder.

A content of the rubber-based binder in the first anode mixture layer may be equal to or greater than a content of the rubber-based binder in the second anode mixture layer.

The content of the rubber-based binder in the first anode mixture layer may be 1% to 3% by weight.

The content of the rubber-based binder in the second anode mixture layer may be 0.1% to 1.0% by weight.

Each of the first anode mixture layer and the second anode mixture layer may further include a conductive material.

A content of the conductive material in the first anode mixture layer and a content of the conductive material in the second anode mixture layer may be respectively 0.01% to 5% by weight.

In some embodiments of the disclosed technology, a lithium secondary battery includes the anode for a lithium secondary battery according to any one of the above-described embodiments.

**BRIEF DESCRIPTION OF DRAWINGS**

Certain aspects, features, and advantages of the disclosed technology are illustrated by the following detailed description with reference to the accompanying drawings.

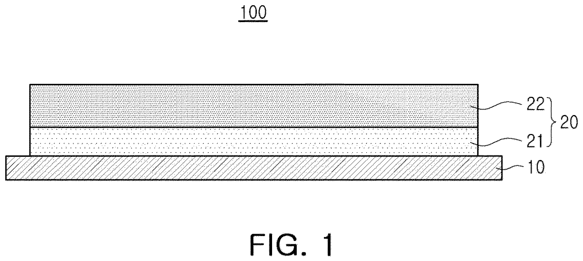

FIG. 1 is a schematic cross-sectional view illustrating a structure of an anode for a lithium secondary battery based on an embodiment of the disclosed technology.

**DETAILED DESCRIPTION**

Section headings are used in the present document only for ease of understanding and do not limit scope of the embodiments to the section in which they are described.

To implement high-capacity, high-energy-density secondary batteries, active development is underway to apply silicon-based active materials (1500 mAh/g) having a higher discharge capacity than graphite (350 mAh/g) to anodes for secondary batteries. When a silicon-based active material having such a high discharge capacity is applied together with a carbon-based active material such as graphite, the loading weight (LW) of the anode active material layer may also be lowered, thereby further increasing the energy density.

However, silicon-based active materials have a higher volume expansion rate than carbon-based active materials, which may lead to more short circuits and cracks between particles, and as a result, the lifespan of the secondary batteries may decrease. In order for secondary batteries to achieve high energy density, it may be difficult to ensure excellent lifespan characteristics and fast charging characteristics of an anode containing a silicon-based active material. The disclosed technology can be implemented in some embodiments to provide an anode for a secondary battery that can address such issues.

As described above, the silicon-based active material included in an anode for secondary batteries to increase the capacity of the anode has a higher volume expansion rate than a volume expansion rate of the carbon-based active material, and thus, lifespan characteristics of a secondary battery including such an anode may be relatively deteriorated. In some implementations of the disclosed technology, when the overall particle size is controlled to be relatively large by lowering the content of fine particles contained in the silicon-based active material, the destruction of the Solid Electrolyte Interphase (SEI) layer may be reduced, thereby improving the lifespan characteristics of secondary batteries.

However, in the case of silicon-based active materials that have a relatively large average particle size by removing fine particles, a relatively small specific surface area may increase the internal resistance value of the battery including the silicon-based active material. Accordingly, the rapid charging characteristics may be rather deteriorated.

In some embodiments of the disclosed technology, in an anode having a multilayer structure, silicon-based active materials with different particle sizes and specific surface areas may be applied to respective layers, thereby addressing the issues discussed above.

FIG. 1 is a schematic cross-sectional view illustrating an example structure of an anode for a secondary battery based on an embodiment of the disclosed technology.

Anode for Secondary Battery (100)

An anode 100 for a lithium secondary battery based on an embodiment includes a current collector; a first anode mixture layer formed on at least one surface of the current collector ; and a second anode mixture layer formed on the first anode mixture layer, and the first anode mixture layer contains a first silicon-based active material, the second anode mixture layer contains a second silicon-based active material, and the $R_{PV}$ value according to Equation 1 below is greater than 1.

$$[\text{Equation 1}]$$

$$R_{PV} = V_{D1}/V_{D2}$$

In Equation 1 above, $R_{PV}$ is the particle volume fraction ratio for each layer, $V_{D1}$ is the volume fraction (%) of particles having a particle diameter of 2.5 μm or less in the first silicon-based active material, and $V_{D2}$ is the volume fraction (%) of particles having a particle diameter of 2.5 μm or less in the second silicon-based active material.

In some embodiments, the anode 100 for a secondary battery has a multilayer structure and includes an anode mixture layer 20 on a current collector 10, and the anode mixture layer includes a first anode mixture layer 21 and a second anode mixture layer 22. The first anode mixture layer 21 is an active material layer (e.g., lower layer) on one surface adjacent to the current collector, and the second anode mixture layer 22 is an active material layer (e.g., upper layer) formed on the first anode mixture layer and relatively spaced apart from the current collector and adjacent to the electrolyte.

In the anode 100 for a secondary battery based on an embodiment, the first anode mixture layer (e.g., lower layer) and the second anode mixture layer (e.g., upper layer) include a first silicon-based active material and a second silicon-based active material, respectively, which are silicon-based active materials having different particle size distributions. In some implementations, the first anode mixture layer (e.g., the lower layer) includes a first silicon-based active material, in which particles with high fine particle content and small size are distributed in a relatively large number, and the second anode mixture layer (e.g., upper layer) includes a second silicon-based active material, in which a relatively large number of particles having a small content of fine particles and a relatively large-sized particles are distributed. Hereinafter, the $R_{PV}$ value of the silicon-based active material will be described in more detail.

In some embodiments, the $R_{PV}$ value of the anode 100 for a lithium secondary battery is greater than 1. For example, the $V_{D1}$ value of the first silicon-based active material is greater than the $V_{D2}$ value of the second silicon-based active material, and the volume fraction(%) value of particles having a particle diameter of 2.5 $\mu$m or less in the first silicon-based active material included in the first anode mixture layer 21 as a lower layer is greater than the volume fraction(%) value of particles having a particle diameter of 2.5 $\mu$m or less in the second silicon-based active material included in the second anode mixture layer 220 as an upper layer. In some implementations, the $R_{PV}$ value of the anode 100 for a lithium secondary battery may be 2 or more or 4 or more, and may be 10 or less or 6 or less.

In the case of the first anode mixture layer 21 as a lower layer, adjacent to the current collector, a large contact area between the current collector and the active material may be required to improve resistance characteristics. On the other hand, in the case of the second anode mixture layer 22 as an upper layer, adjacent to the electrolyte, it may be required that the solid electrolyte interphase (SEI) layer be stably maintained without being destroyed to improve the mobility of lithium ions through the SEI layer formed on the interface between the electrolyte and the surface of the anode and to prevent further decomposition of the electrolyte. In this regard, when the fine particle content is relatively small and thus the silicon-based active material contains more particles of relatively large size, due to the decrease in the surface area of the silicon-based active materials, surface cracks and side reactions due to volume expansion during the charging/discharging process of silicon are reduced, thereby substantially suppressing the phenomenon of destruction of the SEI layer, and further improving the lifespan characteristics of the secondary battery.

Therefore, when the first anode mixture layer 21 (e.g., the lower layer) contains the first silicon-based active material having a relatively high overall specific surface area value due to a relatively high content of fine particles having a small particle diameter, a contact area between the active material and the current collector may be improved. In addition, when the second anode mixture layer 22 (e.g., the upper layer) includes a second silicon-based active material having a relatively small content of fine particles having a small particle diameter, destruction of the SEI layer may be effectively alleviated, and generation of gas due to a side reaction with the electrolyte may be suppressed. Accordingly, resistance characteristics and lifespan characteristics of the anode 100 for a lithium secondary battery may be improved.

The first silicon-based active material may have a $V_{D1}$ value of 1% to 15%, and the second silicon-based active material may have a $V_{D2}$ value of 0.1% to 5%. In some implementations, the $V_{D1}$ value of the first silicon-based active material may be 3% or more or 5% or more, and may be 12% or less or 10% or less. In addition, a $V_{D2}$ value of the second silicon-based active material may be 0.5% or more or 1% or more, and may be 3% or less or 2% or less. When the $V_{D1}$ value and the $V_{D2}$ value are within the above range, the particle size distribution of the silicon-based active material included in respective anode mixture layers is appropriately controlled according to the characteristics required for each layer. In this way, the anode for a lithium secondary battery implemented based on some embodiments may have excellent resistance characteristics and lifespan characteristics.

A method of controlling the particle size distribution of the silicon-based active material is not particularly limited, and a method capable of lowering the fine powder content in the active material by removing the fine powder may also be applied. In some implementations, a method of controlling the particle size may be applied by passing the silicon-based active material through an air jet mill to separate light particles.

A specific surface area value of the first silicon-based active material may be equal to or greater than a specific surface area value of the second silicon-based active material. In some implementations, the specific surface area of the first silicon-based active material may be 3 m$^2$/g to 12 m$^2$/g, and the specific surface area of the second silicon-based active material may be 1 m$^2$/g to 7 m$^2$/g. In some implementations, the specific surface area of the first silicon-based active material may be 3 m$^2$/g or more or 5 m$^2$/g or more, and may be 12 m$^2$/g or less or 9 m$^2$/g or less. In addition, the specific surface area of the second silicon-based active material may be 1 m$^2$/g or more or 3 m$^2$/g or more, and may be 7 m$^2$/g or less or 5.5 m$^2$/g or less.

In the anode 100 for a lithium secondary battery, the content of the first silicon-based active material included in the first anode mixture layer 21 (e.g., the lower layer) may be controlled to be smaller than the content of the second silicon-based active material included in the second anode mixture layer 22 (e.g., the upper layer). For example, the content of the first silicon-based active material in the first anode mixture layer may be less than or equal to the content of the second silicon-based active material in the second anode mixture layer. In some implementations, the first anode mixture layer may include 2% to 7% by weight of the first silicon-based active material, and the second anode mixture layer may include 7% to 14% by weight of the second silicon-based active material.

When the content of the second silicon-based active material included in the second anode mixture layer (e.g., upper layer) adjacent to the electrolyte in which a large amount of lithium ions are present is relatively high, the silicon-based active material, in which the diffusion rate of lithium ions is relatively slow, faces a large amount of lithium ions, such that ions may easily enter and exit. Accordingly, capacity characteristics may be further improved by increasing the content of the silicon-based active material based on the entire anode, while maintaining the rapid charging characteristics of the anode for a secondary battery at an excellent level. In addition, when the content of the first silicon-based active material included in the first anode mixture layer (e.g., lower layer) adjacent to the current collector is relatively low, by adjusting the content of the silicon-based active material of the first anode mixture layer (e.g., lower layer) formed on one side adjacent to the current collector to be relatively low, it is possible to reduce, minimize or prevent separation of the active material layer that would have occurred due to volume expansion, and lifespan characteristics may be improved.

The total content of the first silicon-based active material and the second silicon-based active material may be 2 to 20% by weight based on the total weight of the first anode mixture layer and the second anode mixture layer. In some implementations, the total content of the first silicon-based active material and the second silicon-based active material may be 5% to 15% by weight based on the total weight of the first anode mixture layer and the second anode mixture layer. When the total content of the first silicon-based active material and the second silicon-based active material is within the above range, capacity characteristics of the overall anode may be secured at an excellent level while significantly reducing problems caused by volume expansion of the silicon-based active material.

The types of the first silicon-based active material and the second silicon-based active material are not particularly limited, and may be appropriately selected from a silicon oxide-based active material that is a compound represented by the formula of $SiO_x$ (0<x<2); a silicon carbide-based active material such as Si-C composite or the like, which is a compound represented by the formula of SiC; and/or a combination thereof.

The first silicon-based active material may be a carbon-coated silicon-based active material. For example, the first silicon-based active material may include a coating layer including a carbon-based material on a surface. In addition, the second silicon-based active material may be a metal-doped silicon-based active material. When the surface of the silicon-based active material is coated or doped with a metal and/or carbon-based material, the occurrence of cracks due to volume expansion of the silicon-based active material and side reactions between the silicon-based active material and lithium ions may be mitigated. In some implementations, when the surface of the silicon-based active material is doped with metal, an SEI layer is formed inside the active material due to fine pores formed inside the active material according to the difference in density between the metal and the silicon-based active material, thereby further improving battery performance. In addition, when the surface of the silicon-based active material is coated with a carbon-based material, the conductivity of the silicon-based active material may increase, and the high-temperature lifespan and resistance characteristics may be improved.

Accordingly, when the carbon-coated silicon-based active material is included in the first anode mixture layer 21 (e.g., lower layer), lifespan characteristics at high temperatures may be improved. When the metal-doped silicon-based active material is included in the second anode mixture layer 22 that is upper layer, since the doped metal ions may be used as a channel for lithium ions (Li+) to move, the ionic conductivity may be further improved, and general lifespan characteristics at room temperature at which the ion migration rate is relatively low may be improved.

The metal may be one selected from lithium (Li), sodium (Na), calcium (Ca), magnesium (Mg), aluminum (Al), titanium (Ti), iron (Fe), nickel (Ni), copper (Cu), zinc (Zn), silver (Ag), tin (Sn) and combinations thereof, and may be a metal in powder or fiber form. In some implementations, the metal may include magnesium (Mg). When magnesium (Mg) is applied, active material synthesis may be facilitated by magnesium (Mg), and the cost for active material synthesis may decrease, thereby improving processability and economic feasibility.

The carbon-based material may be one selected from natural graphite, artificial graphite, carbon black, acetylene black, Ketjen black, amorphous carbon fine powder, coke powder, meso-phase carbon, vapor-phase grown carbon fiber, pitch-based carbon fiber, polyacrylonitrile-based carbon fiber, and combinations thereof. In addition, the carbon-based material may be obtained by carbonization from a precursor of sucrose, phenol resin, naphthalene resin, polyvinyl alcohol, furfuryl alcohol resin, polyacrylonitrile resin, polyamide resin, furan resin, cellulose resin, styrene resin, polyimide resin, epoxy resin, vinyl chloride resin, citric acid, stearic acid, polyfluorovinylidene, carboxymethylcellulose (CMC), hydroxypropylcellulose, polyvinylpyrrolidone, tetrafluoroethylene, polyethylene, polypropylene, ethylene-propylene-diene monomer (EPDM), sulfonated EPDM, starch, glucose, gelatin, saccharide, coal-based pitch, petroleum-based pitch, polyvinyl chloride, mesophase pitch, tar, low molecular weight heavy oil, and combinations thereof. In some implementations, the carbon-based material may be obtained by carbonization from a precursor of natural graphite, artificial graphite, or a combination thereof.

The anode 100 for a lithium secondary battery may further include a carbon-based active material. In some implementations, each of the first anode mixture layer and the second anode mixture layer may further include a carbon-based active material. In the carbon-based active material, the first carbon-based active material and the second carbon-based active material may be at least one carbon-based active material selected from artificial graphite, natural graphite, hard carbon, soft carbon, carbon black, acetylene black, ketjen black, super P, graphene, and fibrous carbon.

Each of the first anode mixture layer and the second anode mixture layer may further include a binder. The binder is a compound that serves to attach components in the anode mixture layer to each other and attach the anode mixture layer to the current collector, and may be at least one rubber-based binder selected from the group consisting of styrene-butadiene rubber (SBR), fluorine rubber, ethylene propylene rubber, butyl acrylate rubber, butadiene rubber, isoprene rubber, acrylonitrile rubber, acrylic rubber and silane rubber; a cellulosic binder such as carboxymethylcellulose (CMC), hydroxypropylmethylcellulose, methylcellulose, alkali metal salts thereof, or the like; a water-soluble polymer-based binder such as polyacrylic acid (PAA)-based binders, polyvinyl alcohol (PVA)-based binders, and polyvinyl alcohol-polyacrylic acid copolymer (PVA-PAA Copolymer)-based binders; and/or a combination of two or more of the materials listed above. In some implementations, each of the first anode mixture layer and the second anode mixture layer may further include a rubber-based binder. In some implementations, the first anode mixture layer and the second anode mixture layer may further each include a rubber-based binder and a cellulose-based binder.

An amount of the rubber-based binder in the first anode mixture layer may be equal to or greater than an amount of the rubber-based binder in the second anode mixture layer. In some implementations, the content of the rubber-based binder in the first anode mixture layer may be 1.0% to 3% by weight, and the content of the rubber-based binder in the second anode mixture layer may be 0.1% to 1.0% by weight. In some implementations, the content of the rubber-based binder in the first anode mixture layer may be 1.5% to 2.5% by weight, and the content of the rubber-based binder in the second anode mixture layer may be 0.4% to 0.8% by weight.

If the content of the rubber-based binder in the first anode mixture layer is too small, the adhesive strength of the first anode mixture layer adjacent to the current collector decreases, leading to generation of scrap and separation of the mixture layer in the notching process. On the other hand, if the content of the rubber-based binder is excessively high in the entire anode, electrical resistance may increase, thereby deteriorating battery characteristics. Accordingly, when the content of the rubber-based binder included in the first anode mixture layer (e.g., the lower layer) is adjusted to be relatively higher than the content of the rubber-based binder included in the second anode mixture layer (e.g., the upper layer), it is possible to address such issues, while lowering the content of the rubber-based binder overall in the anode, and thus, the increase in electrical resistance may also be alleviated. Therefore, when the content relationship and value of the rubber-based binder for each anode mixture layer are within the above-described range, the multilayered electrode may have excellent flexibility and adhesive strength, thereby reducing, minimizing or preventing electrode detachment in the process or crack phenomenon or electrode detachment in the charging/discharging process, and low resistance characteristics may be ensured.

Each of the first anode mixture layer and the second anode mixture layer may further include a conductive material. The conductive material is used to impart conductivity to the electrode, maintain the structure of the electrode, and may be used as a conductive material having conductivity without causing side reactions with other elements of the secondary battery. In some implementations, the conductive material may be graphite such as natural graphite or artificial graphite; a carbon-based material such as carbon black, acetylene black, ketjen black, channel black, furnace black, lamp black, thermal black, and carbon fiber; metal powder particles or metal fibers such as copper, nickel, aluminum, and silver; conductive whisker such as zinc oxide and potassium titanate; conductive metal oxide such as titanium oxide; a conductive polymer such as polyphenylene derivatives; or the like, one alone of which or a mixture of two or more of which may be used. In some implementations, the conductive material may include carbon nanotubes (CNT). Carbon nanotubes (CNTs) have higher electron mobility than carbon black, which is an existing conductive material, and may thus implement high energy density with a relatively small amount, and have high strength due to a stable structure thereof, and volume expansion of the silicon-based active material may be substantially alleviated. Therefore, when the conductive material includes carbon nanotubes (CNT), the energy density, lifespan characteristics, and resistance characteristics of the electrode may be further improved.

The content of the conductive material in the first anode mixture layer and the content of the conductive material in the second anode mixture layer may be 0.01 to 5% by weight, respectively. In some implementations, the content of the conductive material in the first anode mixture layer and the content of the conductive material in the second anode mixture layer may respectively be 0.05% to 3% by weight and may be 0.07% to 1% by weight.

When the contents of the conductive material in the first anode mixture layer and the second anode mixture layer are respectively within the above-described ranges, the contact point between the current collector and the anode mixture layer is increased to reduce the resistance between the electrode and the current collector, and even if the electrode expands during use of the battery, the contact point between the current collector and the electrode may be maintained. In addition, the content of the conductive material included in the entire electrode is reduced to secure economic feasibility, and an electrode having excellent energy density may be implemented with a relatively low loading weight by increasing the content of the active material in the mixture layer.

A loading weight (LW) ratio of the first anode mixture layer and the second anode mixture layer may be 20:80 to 80 to 20. In some implementations, the loading weight (LW) ratio of the first anode mixture layer and the second anode mixture layer may be 50:50.

In some implementations, the loading weight (LW) indicates that the amount of the anode mixture layer formed on the current collector, for example, the amount of the layer including, for example, the active material, the binder, the conductive material is formed on the current collector in terms of weight per area. In some implementations, the area is based on the area of the current collector, and the weight is based on the weight of the entire formed anode mixture layer. When the loading weight (LW) value and ratio of the first anode mixture layer and the second anode mixture layer are within the above-described range, an anode having a multilayer structure with excellent capacity characteristics, lifespan characteristics, rapid charging characteristics, and the like may be formed.

The current collector 10 may be appropriately selected from the group consisting of copper foil, nickel foil, stainless steel foil, titanium foil, nickel foam, copper foam, a conductive metal-coated polymer substrate, and combinations thereof.

A method of manufacturing the anode for a secondary battery based on some embodiments of the disclosed technology is not particularly limited, and the anode may be formed by using any method. For example, a first anode slurry including a first solvent, a carbon-based active material, a first silicon-based active material, a binder, and a conductive material is applied on a current collector by a method such as bar coating, casting, spraying or the like, and is dried at 80 to 120°C, to form the first anode mixture layer. Then, a second anode slurry including a second solvent, a carbon-based active material, a second silicon-based active material, a binder, and a conductive material is applied onto the first anode mixture layer by a method such as bar coating, casting, spraying or others, and is dried at 120°C. In this way, the anode for a secondary battery may be formed.

The solvent may be, for example, dimethyl sulfoxide (DMSO), isopropyl alcohol, N-methylpyrrolidone (NMP), acetone, water or others, and in the case of the amount of the solvent, it is sufficient to dissolve or disperse the active material, conductive material, and binder in consideration of the coating thickness and manufacturing yield of the composition for forming the anode mixture layer, and to have a viscosity capable of exhibiting excellent thickness uniformity during subsequent application to form the anode mixture layer.

Lithium Secondary Battery

A lithium secondary battery may include the anode implemented based on one or more embodiments discussed in this patent document.

The lithium secondary battery may include a cathode. A cathode active material included in the cathode is not particularly limited. In some implementations, the cathode active material may include a lithium-transition metal composite oxide. The lithium-transition metal composite oxide may be an NCM-based cathode active material represented by the formula of $Li_xNi_aCo_bMn_cO_y$ ($0<x\leq1.1$, $2\leq y\leq2.02$, $0<a<1$, $0<b<1$, $0<c<1$, $0<a+b+c\leq1$). In addition, the lithium-transition metal composite oxide may be a lithium iron phosphate (LFP)-based cathode active material represented by the formula $LiFePO_4$.

The lithium secondary battery as described above has excellent resistance characteristics, rapid charging characteristics, lifespan characteristics, high temperature performance, and the like, and may thus be significantly useful as a power source for electric vehicles (EVs).

Examples and Comparative Examples

(1) Silicon-Based Active Material

To apply the first silicon-based active material and the second silicon-based active material of Examples and Comparative Examples, the first active material and the second active material were prepared, respectively. In some implementations, silicon oxide ($SiO_x$; $0<x<2$) having a volume fraction of 1.5 vol% and a specific surface area of 5.1 m²/g of particles having a particle diameter of 2.5 μm or less after the fine powder has been removed was used as a first active material, and silicon oxide ($SiO_x$; $0<x<2$) having a volume fraction of 8 vol% and a specific surface area of 7.6 m²/g of particles having a particle size of 2.5 μm or less because the fine powder was not removed was used as the second active material. In addition, silicon oxide ($SiO_x$; $0<x<2$) having a volume fraction of 5 vol% and a specific surface area of 6.4 m²/g of particles having a particle diameter of 2.5 μm or less was used as the third active material.

Thereafter, the first to third active materials were applied respectively, differently as the first silicon-based active material and the second silicon-based active material according to Examples and Comparative Examples, as illustrated in Table 1 below. In addition, the $R_{PV}$ values of Examples and Comparative Examples were calculated according to Equation 1 below and are illustrated in Table 1 below.

[Equation 1]

$$R_{PV} = V_{D1}/V_{D2}$$

In Equation 1, $R_{PV}$ is the particle volume fraction ratio for each layer, $V_{D1}$ is the volume fraction(%) of particles having a particle diameter of 2.5 $\mu$m or less in the first silicon-based active material, and $V_{D2}$ is the volume fraction(%) of particles having a particle diameter of 2.5 $\mu$m or less in the second silicon-based active material.

[Table 1]

| | 1st Anode mixture layer (lower layer) | | | 2nd Anode mixture layer (upper layer) | | | |
|---|---|---|---|---|---|---|---|
| | First silicon-based active material | | | Second silicon-based active material | | | $R_{PV}$ |
| | $V_{D1}$ (vol%) | Specific surface area (m²/g) | Conte nt (wt%) | $V_{D2}$ (vol%) | Specific surface area (m²/g) | Conte nt (wt%) | |
| Example 1 | 8 | 7.6 | 6 | 1.5 | 5.1 | 10 | 5.3 |
| Example 2 | 8 | 7.6 | 2 | 1.5 | 5.1 | 14 | 5.3 |
| Example 3 | 8 | 7.6 | 6 | 5 | 6.4 | 10 | 1.6 |
| Example 4 | 8 | 7.6 | 10 | 1.5 | 5.1 | 6 | 5.3 |
| Comparat ive Example 1 | 8 | 7.6 | 6 | 8 | 7.6 | 10 | 1 |
| Comparat ive Example 2 | 1.5 | 5.1 | 6 | 1.5 | 5.1 | 10 | 1 |

(2) Anode Manufacturing

A first anode slurry including a carbon-based active material, a first silicon-based active material, a binder, and a conductive material, and a second anode slurry containing a carbon-based active material, a second silicon-based active material, a binder, and a conductive material were prepared, respectively. Thereafter, the first anode slurry is applied on the copper foil, which is the current collector, and then dried at 100°C to form a first anode mixture layer, and after coating the second anode slurry on the first anode mixture layer and drying at 100°C to form a second anode mixture layer. Thus, anodes for secondary batteries of Examples and Comparative Examples were prepared. In some implementations, the loading weight (LW) ratio of the first anode mixture layer and the second anode mixture layer was applied as 50:50.

In some implementations, 0.1% by weight of carbon nanotubes (CNTs) were added as the first conductive material in the first anode mixture layer and as the second conductive material in the second anode mixture layer, respectively. Carboxymethylcellulose (CMC) and styrene-butadiene rubber (SBR) were added at 1.2% by weight and 2.4% by weight, respectively, as a first binder in the first anode mixture layer, and carboxymethylcellulose (CMC) and styrene-butadiene rubber (SBR) were added at 1.2% by weight and 0.6% by weight, respectively, as a second binder in the second anode mixture layer. In addition, as a carbon-based active material included in each of the first anode mixture layer and the second anode mixture layer, the balance of artificial graphite was added. All of the above content criteria were based on the total weight of the solids content of each anode slurry.

(3) Manufacturing of Secondary Battery

A cathode was prepared by applying and drying a slurry containing an NCM-based active material, which is a Li-transition metal composite oxide, on aluminum foil, and after inserting the secondary battery cell prepared by interposing a polyolefin separator between the cathode and the anode prepared above into a secondary battery pouch, and after injecting an electrolyte solution in which 1M LiPF$_6$ has been dissolved in a solvent mixed with ethylene carbonate (EC) and diethyl carbonate (DEC) into the secondary battery pouch and sealing the same, a pouch type lithium secondary battery (80Ah) was manufactured. The prepared pouch-type lithium secondary battery was applied as a secondary battery sample of Examples and Comparative Examples.

(4) Evaluation of Resistance Characteristics (DC-IR)

The secondary battery sample was set to 50% SOC at 25°C, rested for 1 hour, and then discharged at 1C current for 10 seconds to measure resistance characteristics, and the results are illustrated in Table 2. In some implementations, the resistance value of the secondary battery sample was measured according to the following Equation 2, and the results are illustrated in Table 2.

$$[Equation\ 2]$$
$$R = (V_0 - V_1)/I$$

In Equation 2, R is the resistance value of the secondary battery, $V_0$ is the voltage of the secondary battery measured by setting the SOC to 50% at 25°C and then resting for 1 hour, V1 is the voltage of the secondary battery measured after discharging at 1C current for 10 seconds, and I is the 1C current value.

(5) Evaluation of Rapid Charging Performance

The secondary battery sample was charged in a step charging method (C-rate: 2.5C/2.25C/2.0C/1.75C/1.5C/1.25C/1.0C/0.75C/0.5C) in the range of SOC 10-82% at 25°C, and after repeating the cycle of discharging at 1/3C, 300 times, the discharge capacity retention rate compared to the initial discharge capacity was measured in %, and the results are illustrated in Table 2.

(6) Evaluation of Lifetime Performance

The secondary battery sample was charged at 0,3 C in the range of SOC 4-98% at 25°C and then cut off at 0.05 C, and after repeating the cycle of discharging at 0.3C, 500 times, the discharge capacity retention rate compared to the initial discharge capacity was measured in %, and the results are illustrated in Table 2.

(7) Evaluation of High Temperature Performance

After charging the secondary battery sample to SOC 98% and storing the same at 60°C for 24 weeks, the capacity retention rate was measured in %, and the results are illustrated in Table 2.

(8) Evaluation of Gas Generation Amount

To relatively evaluate the amount of gas generated inside the secondary battery, after charging the secondary battery sample to SOC 100% and storing the same at 60°C for 24 weeks, it was confirmed whether the sealing part of the pouch-type secondary battery was pushed out and the sealing part was opened (vent). In the case of non-opening, 'No venting', and in the case of opening, 'Vent (required period)' are illustrated in Table 2 below.

[Table 2]

| | DC-IR (mΩ) | Rapid Charging Performance (%) | Lifespan Performance (%) | High Temperature Performance (%) | Gas Generation Amount |
|---|---|---|---|---|---|
| Example 1 | 1.07 | 92.1 | 92.5 | 97.2 | No venting |
| Example 2 | 1.05 | 93.8 | 90.4 | 98.5 | No venting |
| Example 3 | 1.05 | 94.0 | 85.7 | - | Vent(20week) |
| Example 4 | 1.06 | 90.5 | 86.2 | - | Vent(16week) |
| Comparative Example 1 | 1.04 | 95.3 | 82.0 | - | Vent(10week) |
| Comparative Example 2 | 1.10 | 89.0 | 93.2 | 98.7 | No venting |

Considering Tables 1 and 2, in Comparative Example 1 in which, since fine particles are not removed, a second active material containing a relatively larger amount of small-sized particles was applied to both the first and second silicon-based active materials, it showed deteriorated lifespan performance and high temperature performance, and high gas generation amount, as compared to the example. This is because, in Comparative Example 1, only the second active material containing a lot of fine powder with relatively small particle size is applied as the silicon-based active material for the upper and lower layers, and it thus fails to alleviate cracking phenomenon or the like caused by volume expansion of silicon-based active material and thus battery life characteristics and the like deteriorate.

On the other hand, in the case of Comparative Example 2 in which the first active material containing relatively fewer small-sized particles by lowering the fine powder content was applied as both the first silicon-based active material and the second silicon-based active material, it showed lower resistance characteristics and fast charging performance compared to the examples. This is because Comparative Example 2 applies the first active material having a relatively large particle size and a small specific surface area to both the silicon-based active materials of the upper and lower layers, and thus, it is judged that this is due to the increase in the resistance value inside the battery and the relatively difficult entry and exit of lithium ions during rapid charging.

Meanwhile, in the case of Examples 1 to 4 in which the $R_{PV}$ value exceeds 1 by appropriately applying silicon-based active materials having different particle size distributions to the upper and lower anode mixture layers, it was found that resistance characteristics, fast charging performance, lifespan performance, and the like were relatively excellent.

Considering these results, when the $R_{PV}$ value is controlled to exceed 1 by appropriately applying silicon-based active materials having different particle size distributions to the upper and lower anode mixture layers, respectively, as in Examples 1 to 4, and it is judged that an anode for a lithium secondary battery having excellent resistance characteristics, rapid charging performance, and lifespan performance may be provided.

On the other hand, in the case of Example 3, which has a relatively large $V_{D2}$ value of the silicon-based active material included in the upper layer, among Examples 1 to 4, it was found that lifespan performance and the like were relatively inferior compared to Examples 1 and 2. In addition, in the case of Example 4, in which the content of the silicon-based active material contained in the lower layer is greater than in the upper layer, as the content of the silicon-based active material from which the fine powder was not removed was relatively large in the lower layer, the side reaction increased, indicating that the lifespan performance was inferior to Examples 1 and 2, and the rapid charging performance was also found to be relatively inferior.

Therefore, as in Examples 1 and 2, when silicon-based active materials having different particle size distributions are appropriately applied to the upper and lower anode mixture layers, respectively, the volume fraction value of fine particles of the silicon-based active material applied to the upper layer is controlled to be within an appropriate range, and the content of the silicon-based active material contained in the upper layer is controlled to be relatively high as compared to the lower layer, it is judged that an anode for a lithium secondary battery of high-capacity with excellent lifespan characteristics, rapid charging performance, high-temperature performance, and resistance characteristics may be provided.

As set forth above, in some embodiments, an anode for a lithium secondary battery may have excellent rapid charging characteristics and lifespan characteristics. In some implementations, a lithium secondary battery may include the anode.

In some embodiments, an anode for a lithium secondary battery may have excellent capacity characteristics and resistance characteristics. In some embodiments, a lithium secondary battery may include the anode.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document.

**Claims**

1. An anode for a lithium secondary battery, comprising:

a current collector;

a first anode mixture layer formed on at least one surface of the current collector; and

a second anode mixture layer formed on the first anode mixture layer,

wherein the first anode mixture layer includes a first silicon-based active material, and the second anode mixture layer includes a second silicon-based active material, and

wherein a particle volume fraction ratio, $R_{PV} = V_{D1}/V_{D2}$, for each layer is greater than 1,

wherein $V_{D1}$ is a first volume fraction value corresponding to a volume fraction(%) of particles having a particle diameter of 2.5 $\mu$m or less in the first silicon-based active material, and $V_{D2}$ is a second volume fraction value corresponding to a volume fraction(%) of particles having a particle diameter of 2.5 $\mu$m or less in the second silicon-based active material.

2. The anode of claim 1, wherein the first silicon-based active material has the first volume fraction value ($V_{D1}$) of 1% to 15%, and

the second silicon-based active material has the second volume fraction value ($V_{D2}$) of 0.1% to 5%.

3. The anode of claim 1 or 2, wherein a specific surface area value of the first silicon-based active material is equal to or greater than a specific surface area value of the second silicon-based active material.

4. The anode of claim 3, wherein the specific surface area of the first silicon-based active material is from 3 $m^2/g$ to 12 $m^2/g$, and

the specific surface area of the second silicon-based active material is from 1 $m^2/g$ to 7 $m^2/g$.

5. The anode of any one of claims 1 to 4, wherein a content of the first silicon-based active material in the first anode mixture layer is less than or equal to a content of the second silicon-based active material in the second anode mixture layer.

6. The anode of claim 5, wherein the first anode mixture layer includes 2% to 7% by weight of the first silicon-based active material, and

the second anode mixture layer includes 7% to 14% by weight of the second silicon-based active material.

7. The anode of any one of claims 1 to 6, wherein a total content of the first silicon-based active material and the second silicon-based active material is 2% to 20% by weight based on a total weight of the first anode mixture layer and the second anode mixture layer.

8. The anode of any one of claims 1 to 7, wherein the first silicon-based active material is a carbon-coated silicon-based active material, and

the second silicon-based active material is a silicon-based active material doped with a metal.

9. The anode of claim 8, wherein the metal includes magnesium (Mg).

10. The anode of any one of claims 1 to 9, wherein each of the first anode mixture layer and the second anode mixture layer further includes a rubber-based binder,

wherein a content of the rubber-based binder in the first anode mixture layer is equal to or greater than a content of the rubber-based binder in the second anode mixture layer.

11. The anode of claim 10, wherein the content of the rubber-based binder in the first anode mixture layer is 1% to 3% by weight, and

the content of the rubber-based binder in the second anode mixture layer is 0.1% to 1.0% by weight.

12. The anode of any one of claims 1 to 11, wherein each of the first anode mixture layer and the second anode mixture layer further includes a conductive material,

wherein a content of the conductive material in the first anode mixture layer and a content of the conductive material in the second anode mixture layer are respectively 0.01% to 5% by weight.

13. A lithium secondary battery comprising the anode of any one of claims 1 to 12.

100

FIG. 1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/059705 A1 (PANASONIC IP MAN CO LTD [JP]) 1 April 2021 (2021-04-01) <br> * example 1 * <br> * paragraph [0045] * | 1-7, 10-13 | INV. <br> H01M4/13 <br> H01M4/36 <br> H01M4/38 <br> H01M4/587 |
| X | US 2021/234191 A1 (LEE YONG SEOK [KR] ET AL) 29 July 2021 (2021-07-29) <br> * figures 1-3 * <br> * paragraphs [0059] - [0060]; table 1 * | 1-7, 11-13 | H01M4/62 <br> H01M10/052 <br> H01M4/133 <br> H01M4/134 <br> H01M4/1395 |
| X | EP 4 064 383 A1 (SK INNOVATION CO LTD [KR]) 28 September 2022 (2022-09-28) <br> * paragraphs [0041], [0105]; example 5; table 1 * | 1-13 | ADD. <br> H01M4/02 |
| X | EP 3 780 169 A1 (PANASONIC CORP [JP]; SANYO ELECTRIC CO [JP]) 17 February 2021 (2021-02-17) <br> * examples 1,3; table 1 * <br> * paragraphs [0027], [0028], [0047] * | 1-7, 10-13 | |
| A | CN 113 939 929 A (LG CHEMICAL LTD) 14 January 2022 (2022-01-14) <br> * the whole document * | 1-13 | **TECHNICAL FIELDS SEARCHED (IPC)** <br> H01M |
| A | US 2021/218019 A1 (TAMURA TAKAMASA [JP] ET AL) 15 July 2021 (2021-07-15) <br> * the whole document * | 1-13 | |
| A | US 2022/393148 A1 (MORIKAWA YUKI [JP] ET AL) 8 December 2022 (2022-12-08) <br> * the whole document * | 1-13 | |

The present search report has been drawn up for all claims

| Place of search | Date of completion of the search | Examiner |
|---|---|---|
| Munich | 26 August 2024 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6815

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | Publication date | Patent family member(s) | Publication date |
|---|---|---|---|
| WO 2021059705 A1 | 01-04-2021 | CN 114424360 A<br>EP 4037015 A1<br>JP WO2021059705 A1<br>US 2022344659 A1<br>WO 2021059705 A1 | 29-04-2022<br>03-08-2022<br>01-04-2021<br>27-10-2022<br>01-04-2021 |
| US 2021234191 A1 | 29-07-2021 | CN 113193225 A<br>KR 20210096814 A<br>US 2021234191 A1 | 30-07-2021<br>06-08-2021<br>29-07-2021 |
| EP 4064383 A1 | 28-09-2022 | CN 115132969 A<br>CN 117334839 A<br>EP 4064383 A1<br>EP 4220752 A2<br>KR 20220133624 A<br>KR 20230127948 A<br>US 2022310991 A1 | 30-09-2022<br>02-01-2024<br>28-09-2022<br>02-08-2023<br>05-10-2022<br>01-09-2023<br>29-09-2022 |
| EP 3780169 A1 | 17-02-2021 | CN 111344884 A<br>EP 3780169 A1<br>JP 7161523 B2<br>JP WO2019187537 A1<br>US 2021013496 A1<br>WO 2019187537 A1 | 26-06-2020<br>17-02-2021<br>26-10-2022<br>25-03-2021<br>14-01-2021<br>03-10-2019 |
| CN 113939929 A | 14-01-2022 | CN 113939929 A<br>EP 3965184 A1<br>KR 20210123480 A<br>PL 3965184 T3<br>US 2022255059 A1<br>WO 2021201399 A1 | 14-01-2022<br>09-03-2022<br>14-10-2021<br>15-07-2024<br>11-08-2022<br>07-10-2021 |
| US 2021218019 A1 | 15-07-2021 | CN 112204768 A<br>EP 3813158 A1<br>JP 7386432 B2<br>JP WO2019230298 A1<br>US 2021218019 A1<br>WO 2019230298 A1 | 08-01-2021<br>28-04-2021<br>27-11-2023<br>10-06-2021<br>15-07-2021<br>05-12-2019 |
| US 2022393148 A1 | 08-12-2022 | CN 115458735 A<br>JP 7353324 B2<br>JP 2022187573 A<br>US 2022393148 A1 | 09-12-2022<br>29-09-2023<br>20-12-2022<br>08-12-2022 |

EPO FORM P0459

For more details about this annex : see Official Journal of the European Patent Office, No. 12/82